# EUROPÄISCHE PATENTSCHRIFT

(11) **EP 1 125 869 B1**
(45) Veröffentlichungstag und Bekanntmachung des Hinweises auf die Patenterteilung: **24.02.2010**
(21) Anmeldenummer: 01102372.8
(22) Anmeldetag: 02.02.2001
(51) Int. Cl.: B65G 37/02, B23P 21/00

(54) **Montagevorrichtung**
Assembling device
Dispositif d'assemblage

(30) Priorität: 14.02.2000 DE 10006478
(43) Veröffentlichungstag der Anmeldung: 22.08.2001
(73) Patentinhaber: LP-Montagetechik GmbH, 91056 Erlangen (DE)
(72) Erfinder:
(74) Vertreter: Gassner, Wolfgang

(56) Entgegenhaltungen:
- EP-A- 0 340 639
- DE-A- 2 445 650
- DE-A- 3 436 468
- FR-A- 2 712 833
- JP-A- 06 114 655
- JP-A- 59 001 177
- JP-A- 59 192 477
- US-A- 5 709 303

## Beschreibung

Die Erfindung betrifft eine Montagevorrichtung. Sie betrifft insbesondere eine hybride Montagevorrichtung.

Aus S. Hesse: Montagemaschinen, 1. Auflage, Würzburg, Vogel-Verlag 1993, S. 66 - 67, S. 158 ff. ist eine Ringtischmontagemaschine bekannt. Dabei weist der Ringtisch an seinem Außenumfang eine Ausnehmung auf.

Aus der DE 34 36 468 A1 ist eine Vorrichtung zur Bearbeitung und Montage von Gruppen zueinander gehörender Teile bekannt. Dabei sind Kreisscheiben vorgesehen, in denen in Radialrichtung mehrere Teilegruppen in geeigneten Teileaufnahmen aufgenommen sind. Die Teile können zur Optimierung der Montage mittels eines Greifers radial versetzt werden.

Unter hybriden Montagevorrichtungen werden Montagevorrichtungen verstanden, bei denen eine Montage an einer Arbeitsstation teilautomatisiert, d.h. in Zusammenwirken mit manueller Tätigkeit, durchgeführt wird. Hybride Montagevorrichtungen sind insbesondere zur Herstellung von Kleinserien bis zu einer Stückzahl von 1 bis 2 Millionen pro Jahr wirtschaftlich. Erst bei einer höheren Stückzahl lohnt sich die Anschaffung einer vollautomatischen Fließmontagelinie.

Die nach dem Stand der Technik bekannten hybriden Montagevorrichtungen sind nicht auf die optimale Nutzung der menschlichen Arbeitskraft ausgelegt. Häufig ist es zur Durchführung der manuellen Montagetätigkeit notwendig, daß z.B. ein weit entferntes Werkzeug, Bauteil oder dgl. gegriffen oder geholt werden muß. Der zeitliche Aufwand für solche Tätigkeiten mindert die Montageeffizienz und erhöht damit die Montagekosten.

Ein weiterer Nachteil herkömmlicher hybrider Montagetechniken und der daran angepaßten Montagevorrichtungen besteht darin, daß jedes zu montierende Teil "stückweise" fertiggestellt wird. D.h. es werden nacheinander am zu montierenden Werkstück in unmittelbarer zeitlicher Aufeinanderfolge eine Vielzahl verschiedener manueller Arbeitsgänge, wie Bestücken, Löten, Prüfen und dgl., ausgeführt. Eine solche stückweise Montage erfordert einen häufigen Wechsel von Werkzeugen, das Heranholen von Teilen und dgl. Auch diese Vorgänge sind zeitaufwendig und erhöhen die Montagekosten.

Aufgabe der Erfindung ist es, die Nachteile nach dem Stand der Technik zu beseitigen. Es soll insbesondere eine Montagevorrichtung angegeben werden, mit der eine hybride Montagetätigkeit schnell und kostengünstig durchführbar ist.

Diese Aufgabe wird durch die Merkmale des Anspruchs 1 gelöst. Zweckmäßige Ausgestaltungen ergeben sich aus den Merkmalen der Ansprüche 2 bis 11.

Nach Maßgabe der Erfindung ist eine hybride Montagevorrichtung mit einem bogenförmigen, mehrere Montagestationen aufweisenden Tisch und einer Einrichtung zum rollenden oder gleitenden Verschieben von Mehrfachwerkstückträgern auf einer Tischoberseite entlang eines vorgegebenen halbkreisartig gebogenen Wegs vorgesehen, wobei der Tisch arbeitsplatzseitig eine halbkreisartige Ausnehmung aufweist und der Weg konzentrisch zur Ausnehmung angeordnet ist, wobei jede Montagestation einen Durchbruch im Tisch aufweist, wobei eine Einrichtung zur Aufnahme des Mehrfachwerkstückträgers eine den Durchbruch durchgreifende Hubeinrichtung zum Abheben des Mehrfachwerkstückträgers vom Tisch aufweist, und wobei die Mehrfachwerkstückträger eine Zentrierzapfenausnehmung zum Eingriff eines an der Einrichtung zur Aufnahme vorgesehenen Zentrierzapfens aufweisen. Die vorgeschlagene Montagevorrichtung ist im Hinblick auf die bei der manuellen Tätigkeit z.B. zurückzulegenden Greifwege optimiert. Sie ist platzsparend und kompakt aufgebaut. Durch die halbkreisartige Ausnehmung sind die Greifwege auch beim Vorsehen mehrerer entlang des halbkreisartig gebogenen Wegs angeordneter Arbeitsstationen stets gleich lang. Der Einsatz von Mehrfachwerkstückträgern ermöglicht eine sogenannte "verrichtungsweise" Montage. Darunter wird eine Montagetätigkeit verstanden, bei der ein und derselbe Arbeitsgang bei einer Vielzahl der auf den Mehrfachwerkstückträger aufgenommenen Bauteile nacheinander wiederholend durchgeführt wird. Eine solche verrichtungsweise Montagetätigkeit ist besonders zeitsparend, weil dazu z.B. nur ein einziges Mal ein Werkzeug herbeigeholt werden muß. Nach der Durchführung der verrichtungsweisen Montagetätigkeit kann der Mehrfachwerkstückträger zu einer weiteren entlang des bogenförmigen Wegs vorgesehen Arbeitsstation verschoben werden. Bei der weiteren Arbeitsstation kann entweder erneut eine verrichtungsweise manuelle Montage durchgeführt oder auch z.B. mittels eines Roboters eine automatische weitere Montage erfolgen; die Arbeitsstation kann auch mit einer Presse einem Schrauber oder dgl. ausgestattet sein.

Von den bogenseitigen Tischkanten ragen zweckmäßigerweise Stege über die Oberseite des Tisch zur Führung der Mehrfachwerkstückträger hervor. Die vorgeschlagene Montagevorrichtung ist besonders einfach und kostengünstig herstellbar.

Zweckmäßigerweise weist der Tisch drei Montagestationen auf. Ferner ist es möglich, daß der Mehrfachwerkstückträger mittels der Einrichtung zur Aufnahme um einen vorgegebenen Winkelbetrag drehbar ist. Die vorgenannten Merkmale ermöglichen ein automatisches taktweises Drehen des, vorzugsweise tellerartig ausgebildeten, Mehrfachwerkstückträgers. Das ermöglicht es, der Arbeitskraft das zu montierende Bauteil jeweils in einer optimalen Arbeitsposition vorzulegen.

Die Einrichtung zum Verschieben über die Tischoberfläche kann abschnittsweise hervorstehende Rollelemente, insbesondere Kugelrollen, Walzen der Rollen aufweisen. Dadurch wird der Kraftaufwand zum Verschieben der Montagevorrichtung zur nächsten Montagestation drastisch herabgesetzt.

Die Mehrfachwerkstückträger können mindestens eine Mitnehmerdornausnehmung zum Eingriff eines Mitnehmerdorns aufweisen. Das ermöglicht auf einfache Weise die Herstellung einer störunanfälligen Verbindung zwischen dem Mehrfachwerkstückträger und der Einrichtung zur Aufnahme desselben.

Nach einem weiteren Ausgestaltungsmerkmal ist vorgesehen, daß mindestens einer Montagestation ein in einer Ebene oberhalb des auf dem Tisch aufgenommenen Mehrfachwerkstückträgers angeordnetes Vorratskarussell zugeordnet ist. Dabei kann eine, vorzugsweise mit der Einrichtung zur Aufnahme synchronisierte, Einrichtung zum Drehen des Vorratskarussells um einen vorgegebenen Winkelbetrag vorgesehen sein. Das Vorsehen des vorgeschlagenen Vorratskarussells ermöglicht eine Bereitstellung von zur Montage erforderlichen Bauteilen. Nach einer Umdrehung des Mehrfachwerkstückträgers wird das Vorratskarusell soweit gedreht, daß das nunmehr benötigte Ersatzteil in günstiger Greifposition bereitgestellt wird. Dabei werden wiederum die Greifwege verkürzt. Die Montage wird erleichtert, beschleunigt und damit effizienter.

Je nach Anwendungsfall kann es vorteilhaft sein, daß mindestens einer Montagestation eine automatisierte Bestückungs-, Füge-, Montage- oder Prüfeinrichtung zugeordnet ist.

Nach einer weiteren Ausführungsvariante ist eine Fließmontagevorrichtung vorgesehen, bei der mehrere erfindungsgemäße Montagevorrichtungen so miteinander verbunden sind, daß der Mehrfachwerkstückträger von einer Montagevorrichtung zur damit verbundenen nächsten Montagevorrichtung verschiebbar ist. Vorteilhafterweise sind die mehreren Montagevorrichtungen so miteinander verbunden, daß die Zuführrichtung der Mehrfachwerkstückträger und deren Abführrichtung entgegengesetzt sind. Das bewirkt eine Verkürzung der Transportwege und damit eine Steigerung der Montageeffizienz.

Nachfolgend werden Ausführungsbeispiele der Erfindung anhand der Zeichnungen näher erläutert. Es zeigen:
- Fig.1: eine Draufsicht auf eine erste Montagevorrichtung,
- Fig.2: eine schematische Querschnittsansicht gemäß der Schnittlinie X-X' in Fig.1,
- Fig.3: eine Draufsicht auf eine zweite Montagevorrichtung,
- Fig.4: eine Draufsicht auf eine dritte Montagevorrichtung und
- Fig.5: eine Draufsicht auf eine Fließmontagevorrichtung.

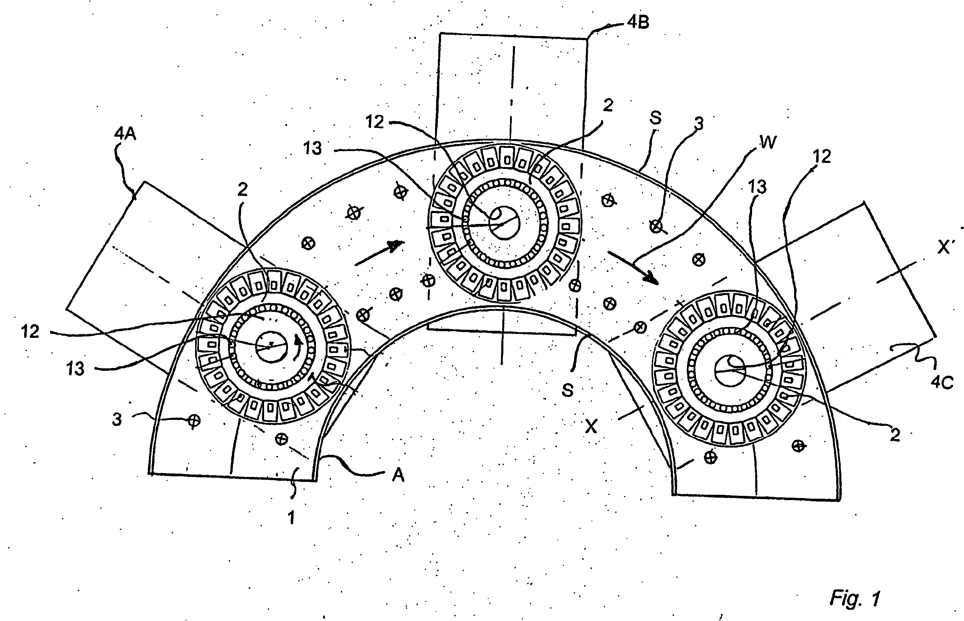

Bei den in den Fig.1 bis 5 gezeigten Montagevorrichtungen ist ein Tisch 1 in Form eines halbkreisartigen Bogenabschnitts ausgebildet. Der Tisch 1 weist insbesondere eine halbkreisartige Ausnehmung A auf, in deren Bereich z.B. ein Sitz- oder Stehplatz für eine Arbeitskraft angeordnet sein kann.

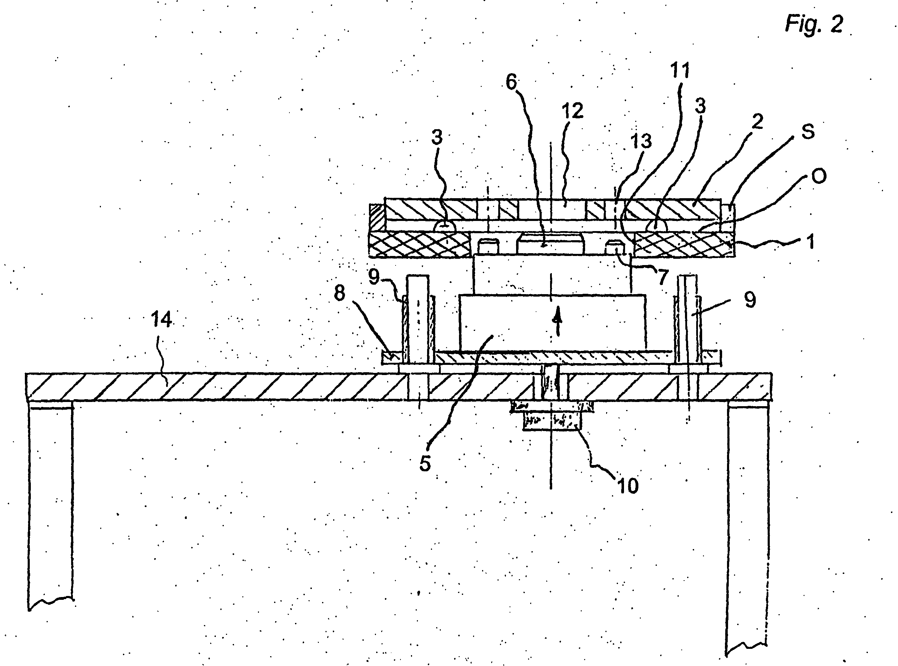

Die einander gegenüberliegenden halbkreisförmig ausgebildeten Tischkanten weisen, wie insbesondere aus Fig.2 ersichtlich ist, über die Oberseite O des Tischs 1 ragende Stege S auf. Die Stege S begrenzen einen auf der Oberseite O des Tischs 1 gebildeten Transportweg bzw. Weg W. Die Transportrichtung entlang des Wegs W ist in Fig.1 durch Pfeile wiedergegeben. Der Weg W beschreibt eine Kurve um 180°Grad.

Mit dem Bezugszeichen 2 sind tellerförmig ausgebildete Mehrfachwerkstückträger bezeichnet. Die Mehrfachwerkstückträger 2 sind entlang des Wegs W verschiebbar. Zur Erleichterung der Verschiebebewegung sind in den Tisch 1 Kugelrollen 3 eingelassen.

Bei den in den Fig.1 bis 4 gezeigten Ausführungsbeispielen sind jeweils 3 Montagestationen 4A, 4B, 4C vorgesehen. Jeder Montagestation 4A, 4B, 4C ist eine Einrichtung zum Anheben und Drehen des Mehrfachwerkstückträgers 2 zugeordnet. Die Einrichtung umfaßt eine Rundtakteinheit 5, die an ihrem einen Ende einen Zentrierzapfen 6 und einen Mitnehmerdorn 7 aufweist. Die Rundtakteinheit 5 ist auf einer Hubplatte 8 aufgenommen, die verschiebbar in Vertikalführungen 9 geführt ist. Mittels eines Pneumatikzylinders 10 kann die Rundtakteinheit 5 vertikal bewegt werden.

Ein im Tisch 1 im Bereich jeder der Montageeinheiten 4A, 4B, 4C vorgesehener Durchbruch 11 ermöglicht einen Eingriff des Zentrierzapfens 6 sowie des Mitnehmerdorns 7 in eine korrespondierende Zentrierzapfenausnehmung 12 bzw. in eine der Mitnehmerdornausnehmungen 13 des auf dem Tisch 1 aufgenommenen Mehrfachwerkstückträgers 2. - Die Einrichtung zur Aufnahme des Mehrfachwerkstückträgers 2 ist zweckmäßigerweise auf einem weiteren Tisch 14 aufgenommen. Auf dem weiteren Tisch 14 kann auch der in einer Ebene darüber befindliche Tisch 1 abgestützt sein.

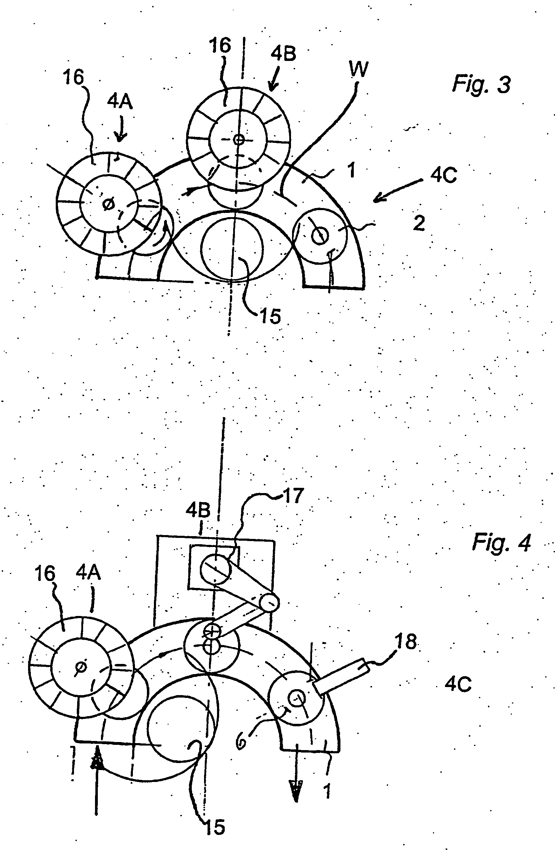

Bei den in den Fig. 3 und 4 gezeigten zweiten und dritten Montageeinrichtungen ist mit 15 der Sitzplatz der Arbeitskraft bezeichnet. Ferner ist hier der Greifradius der Arbeitskraft kenntlich gemacht. Durch die halbkreisförmige Ausbildung des Tischs 1 und den konzentrisch dazu angeordneten Weg W können im Greifradius der Arbeitskraft problemlos drei Montagestationen 4A, 4B, 4C bedient werden.

Bei der in Fig. 3 gezeigten zweiten Montagevorrichtung sind in einer Ebene oberhalb der ersten und der zweiten Montagestation 4A und 4B jeweils Vorratskarussells 16 vorgesehen. Die Vorratskarussells 16 sind drehbar. Deren Drehung kann insbesondere taktweise in Synchronisation mit der Drehbewegung der Mehrfachwerkstückträger 2 erfolgen.

Bei der in Fig.4 gezeigten dritten Montagevorrichtung weist lediglich die erste Montagestation 4A ein Vorratskarussell 16 auf. Die zweite Montagestation 4B ist mit einem Roboter 17 und die dritte Montagestation 4C mit einer automatischen Prüfeinrichtung 18 versehen. Bei der dritten Montagevorrichtung findet eine manuelle Tätigkeit also lediglich bei der ersten Montagestation 4A statt.

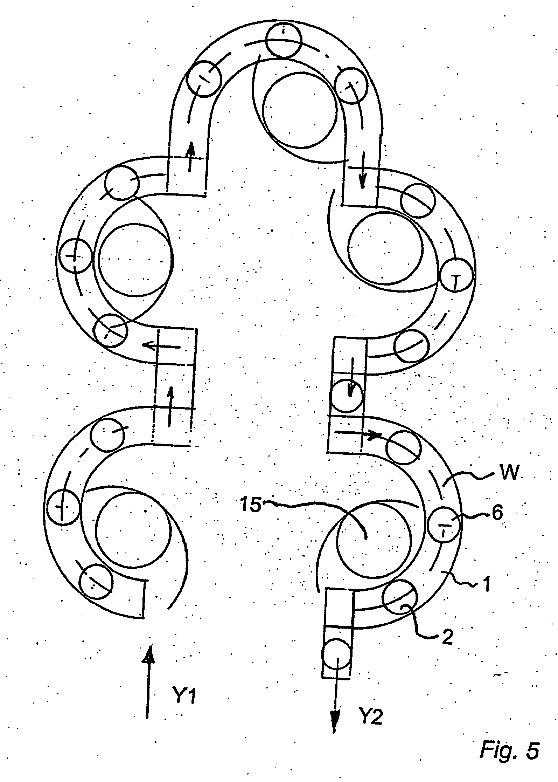

Fig.5 zeigt in Draufsicht eine Kombination mehrerer der in den Fig.1 und 2 beschriebenen Montagevorrichtungen. Eine solche Fließmontagevorrichtung eignet sich insbesondere zur Montage komplexer Produkte. Die Montagevorrichtungen sind insbesondere so aneinander gekoppelt, daß die Mehrfachwerkstückträger 2 von einer Montagevorrichtung zur nächsten Montagevorrichtung verschiebbar sind. Die Zu- und Abfuhr der Mehrfachwerkstückträger 2 erfolgt in entgegengesetzten Richtungen, jedoch in unmittelbarer Nähe, so daß ein gemeinsamer Transportweg zum Zu- und Abführen der Mehrfachwerkstückträger 2 realisierbar ist. Die Zu- und Abführrichtungen sind durch die Pfeile Y1 und Y2 kenntlich gemacht. Die weiteren Pfeile in Fig.5 verdeutlichen die Bewegungsrichtungen der Mehrfachwerkstückträger 2 auf dem Weg W.

Die Funktion der Montagevorrichtung ist folgende:

Zunächst wird ein Mehrfachwerkstückträger 2 in die erste Montagestation 4A auf dem Weg W verschoben. Die Vorrichtung zur Aufnahme des Mehrfachwerkstückträgers 2 wird in Betrieb gesetzt. Es wird die Rundtakteinheit 5 mittels des Pneumatikzylinders 10 angehoben, so daß der Zentrierzapfen 6 und der Mitnehmerdorn 7 durch den Durchbruch 11 des Tischs 1 bewegt und in Eingriff mit der dazu korrespondierenden Zentrierzapfausnehmung 12 und der bzw. einer der Mitnehmerdornausnehmungen 13 des Mehrfachwerkstückträgers 2 kommen. Der Mehrfachwerkstückträger 2 wird mittels des Pneumatikzylinders 10 etwa 0,5 cm vom Tisch 1 abgehoben. Die Arbeitskraft beginnt sodann die auf dem Mehrfachwerkstückträger 2 aufgenommenen Werkstücke zu bearbeiten. Es wird wiederholend derselbe Arbeitsgang durchgeführt. Dazu wird nach jedem Arbeitsgang der Mehrfachwerkstückträger 2 um einen vorgegebenen Winkelbetrag weitergedreht.

Sobald sämtliche Werkstücke in der Montagestation 4A bearbeitet worden sind, wird der Mehrfachwerkstückträger 2 wieder auf den Tisch 1 abgesenkt und zur zweiten Montagestation 4B weiterbewegt. Er wird dort in gleicher Weise von der nächsten Einrichtung zur Aufnahme des Mehrfachwerkstückträgers 2 aufgenommen. Die Werkstücke werden entweder manuell oder mittels eines Roboters 17 oder anderer Automatikeinheiten weiterbearbeitet oder z. B. mittels einer Prüfeinrichtung 18 geprüft.

## Patentansprüche

1. Hybride Montagevorrichtung mit einem bogenförmigen, mehrere Montagestationen (4A, 4B, 4C) aufweisenden Tisch (1) und einer Einrichtung (3) zum rollenden oder gleitenden Verschieben von Mehrfachwerkstückträgern (2) auf einer Tischoberseite (O) entlang eines vorgegebenen halbkreisartig gebogenen Wegs (W),
wobei der Tisch (1) arbeitsplatzseitig eine halbkreisartige Ausnehmung (A) aufweist und der Weg (W) konzentrisch zur Ausnehmung (A) angeordnet ist,
wobei jede Montagestation (4A, 4B, 4C) einen Durchbruch (11) im Tisch (1) aufweist,
wobei eine Einrichtung zur Aufnahme des Mehrfachwerkstückträgers (2) eine den Durchbruch (11) durchgreifende Hubeinrichtung (5, 8, 10) zum Abheben des Mehrfachwerkstückträgers (2) vom Tisch (1) aufweist, und
wobei die Mehrfachwerkstückträger (2) eine Zentrierzapfenausnehmung (12) zum Eingriff eines an der Einrichtung zur Aufnahme vorgesehenen Zentrierzapfens (6) aufweisen.

2. Montagevorrichtung nach Anspruch 1, wobei von den bogenseitigen Tischkanten Stege (S) über die Oberseite (O) des Tischs (1) zur Führung der Mehrfachwerkstückträger (2) hervorragen.

3. Montagevorrichtung nach einem der vorhergehenden Ansprüche, wobei der Tisch (1) drei Montagestationen (4A, 4B, 4C) aufweist.

4. Montagevorrichtung nach Anspruch 1, wobei der Mehrfachwerkstückträger (2) mittels der Einrichtung zur Aufnahme um einen vorgegebenen Winkelbetrag drehbar ist.

5. Montagevorrichtung nach Anspruch 1, wobei die Mehrfachwerkstückträger (2) mindestens eine Mitnehmerdornausnehmung (13) zum Eingriff eines Mitnehmerdorns (7) aufweist.

6. Montagevorrichtung nach einem der vorhergehenden Ansprüche, wobei die Einrichtung zum Verschieben über die Tischoberfläche (O) abschnittsweise hervorstehende Rollelemente (3), insbesondere Kugelrollen, Walzen oder Rollen, aufweist.

7. Montagevorrichtung nach einem der vorhergehenden Ansprüche, wobei mindestens einer Montagestation (4A, 4B, 4C) ein in einer Ebene oberhalb des auf dem Tisch (1) aufgenommenen Mehrfachwerkstückträgers (2) angeordnetes Vorratskarussell (16) zugeordnet ist.

8. Montagevorrichtung nach Anspruch 7, wobei eine, vorzugsweise mit der Einrichtung zur Aufnahme synchronisierte, Einrichtung zum Drehen des Vorratskarusells (16) um einen vorgegebenen Winkelbetrag vorgesehen ist.

9. Montagevorrichtung nach einem der vorhergehenden Ansprüche, wobei mindestens einer Montagestation (4A, 4B, 4C) eine automatisierte Bestückungs-, Füge-, Montage- oder Prüfeinrichtung zugeordnet ist.

10. Fließmontagevorrichtung, wobei mehrere Montagevorrichtungen nach einem der vorhergehenden Ansprüche so miteinander verbunden sind, daß der Mehrfachwerkstückträger (2) von einer Montagevorrichtung zur damit verbundenen nächsten Montagevorrichtung verschiebbar ist.

11. Fließmontagevorrichtung nach Anspruch 10, wobei die mehreren Montagevorrichtungen so miteinander verbunden sind, daß die Zuführrichtung (Y1) der Mehrfachwerkstückträger (2), und deren Abführrichtung (Y2) entgegengesetzt sind.

## Claims

1. Hybrid mounting device comprising an arch-shaped table (1) having a plurality of mounting stations (4A, 4B, 4C) and a unit (3) for the rolling or sliding shift of multiple work piece carriers (2) on a top side (O) of the table along a specified semicircular-like, curved path (W),
wherein the table (1) has a semicircular-like recess (A) on its work station side and the path (W) is arranged concentrically to the recess (A),
wherein each mounting station (4A, 4B, 4C) has a breakthrough (11) in the table (1),
wherein a unit for holding the multiple work piece carrier (2) has a lifting unit (5, 8, 10) reaching through the breakthrough (11) to raise the multiple work piece carrier (2) from the table (1), and
wherein the multiple work piece carriers (2) have a centering pin recess (12) for engaging a centering pin (6) provided on the holder unit.

2. Mounting device as defined in claim 1, wherein bars (S) protrude from the table edges on the arch side over the top side (0) of the table (1) for guiding the multiple work piece carriers (2).

3. Mounting device as defined in one of the preceding claims, wherein the table (1) has three mounting stations (4A, 4B, 4C).

4. Mounting device as defined in claim 1, wherein the multiple work piece carrier (2) can be rotated by a specified angle amount via the holder unit.

5. Mounting device as defined in claim 1, wherein the multiple work piece carriers (2) have at least one catch pin recess (13) for engaging a catch pin (7).

6. Mounting device as defined in one of the preceding claims, wherein the unit for shifting has roller elements (3) protruding over the table's top side (O) in sections, in particular ball rollers, cylinders, or rollers.

7. Mounting device as defined in one of the preceding claims, wherein a supply carousel (16) held at a level above the multiple work piece carrier (2) located on the table (1) is allocated to at least one mounting station (4A, 4B, 4C).

8. Mounting device as defined in claim 7, wherein one, preferably synchronized with the holder unit, unit for rotating the supply carousel (16) by a specified angle amount is provided.

9. Mounting device as defined in one of the preceding claims, wherein one automated configuration, connection, mounting or test unit is allocated to at least one mounting station (4A, 4B, 4C).

10. Flow mounting device, wherein a plurality of mounting devices as defined in one of the preceding claims are connected with each other in such a way that the multiple work piece carrier (2) can be shifted from one mounting device to the next thus connected mounting device.

11. Flow mounting device as defined in claim 10, wherein the plurality of mounting devices are connected with each other in such a way that the feeder direction (Y1) of the multiple work piece carriers (2) and their departing direction (Y2) are opposite.

## Revendications

1. Dispositif de montage hybride avec un plateau cintré (1) présentant plusieurs postes de montage (4A, 4B, 4C) et un système (3) de déplacement roulant ou coulissant de porte-pièces multiples (2) sur une face supérieure de plateau (0) sur la longueur d'une course prédéfinie courbée en forme de demi-cercle (W),
où le plateau (1) présente côté poste de travail un évidement (A) en forme de demi-cercle et la course (W) est effectuée concentriquement par rapport à l'évidement (A),
où chaque poste de montage (4A, 4B, 4C) présente un passage (11) dans le plateau (1),
où un système de réception du porte-pièces multiple (2) présente un système de levage (5, 8, 10) traversant le passage (11) pour relever le porte-pièces multiple (2) du plateau (1), et
où les porte-pièces multiples (2) présentent un évidement du tourillon de centrage (12) pour l'engagement d'un tourillon de centrage (6) prévu au système de réception.

2. Dispositif de montage selon la revendication 1, où des barrettes (S) dépassent des bords du plateau côté cintré au-dessus de la face supérieure (O) du plateau (1) pour le guidage des porte-pièces multiples (2).

3. Dispositif de montage selon l'une des revendications précédentes, où le plateau (1) présente trois postes de montage (4A, 4B, 4C).

4. Dispositif de montage selon la revendication 1, où le porte-pièces multiple (2) peut pivoter d'une valeur d'angle prédéfinie au moyen du système de réception.

5. Dispositif de montage selon la revendication 1, où le porte-pièces multiple (2) présente au moins un évidement de broche d'entraînement (13) pour l'engagement d'une broche d'entraînement (7).

6. Dispositif de montage selon l'une des revendications précédentes, où le système de déplacement au-dessus de la surface supérieure du plateau (0) présente des éléments roulants partiellement saillants (3), en particulier des rouleaux à billes, des cylindres ou des rouleaux.

7. Dispositif de montage selon l'une des revendications précédentes, où un carrousel de stockage (16) aménagé dans un plan au-dessus du porte-pièces multiple (2) logé sur le plateau (1) est assigné à au moins un poste de montage (4A, 4B, 4C).

8. Dispositif de montage selon la revendication 7, où un système de rotation du carrousel de stockage (16) d'une valeur d'angle prédéfinie est prévu, de préférence synchronisé avec le système de réception.

9. Dispositif de montage selon l'une des revendications précédentes, où un système automatisé d'équipement, d'assemblage, de montage ou d'essai est assigné à au moins un poste de montage (4A, 4B, 4C).

10. Dispositif de montage à la chaîne, où plusieurs dispositifs de montage selon l'une des revendications précédentes sont reliés entre eux de façon telle que le porte-pièces multiple (2) peut être déplacé d'un dispositif de montage au dispositif de montage suivant qui lui est relié.

11. Dispositif de montage à la chaîne selon la revendication 10, où les différents dispositifs de montage sont reliés entre eux de façon telle que le sens d'alimentation (Y1) des porte-pièces multiples (2) est opposé à leur sens d'évacuation (Y2).
